# EUROPÄISCHE PATENTSCHRIFT

(11) **EP 1 447 138 B1**
(45) Veröffentlichungstag und Bekanntmachung des Hinweises auf die Patenterteilung: **22.11.2006**
(21) Anmeldenummer: 04002411.9
(22) Anmeldetag: 04.02.2004
(51) Int. Cl.: B03B 9/04, B03B 9/06, B09B 3/00, B09C 1/00

(54) **Aufbereitung von Schlacke aus Kehrichtverbrennungsanlagen**
Treatment from slags coming from waste combustion installations
Traitement des scories provenant des incinérateurs d'ordures

(30) Priorität: 14.02.2003 DE 10306132
(43) Veröffentlichungstag der Anmeldung: 18.08.2004
(73) Patentinhaber: Scherer, Gerhard, 67071 Ludwigshafen (DE)
(72) Erfinder: Scherer, Gerhard, 67071 Ludwigshafen (DE)
(74) Vertreter: Zellentin, Wiger

(56) Entgegenhaltungen:
- EP-A- 0 691 160
- US-A- 4 044 956
- US-A- 5 356 082
- US-A- 5 671 688

## Beschreibung

Die vorliegende Erfindung betrifft die Aufbereitung von Schlacke aus Abfallverbrennungsanlagen, in welchen Hausmüll u. a. Abfälle thermisch behandelt werden. Rohschlacken aus Abfallverbrennungsanlagen sind Gemenge aus gesinterten Verbrennungsprodukten (mineralische Schlacken und Aschen), Eisenschrott (ferromagnetischer Fe-Schrott), Nichteisenmetalle (NE-Metalle), Glas-, Keramikscherben sowie anderen mineralischen Komponenten und auch unvollständig verbrannten Abfällen ("Unverbranntes").

Diese Schlacke kann im unbehandelten Zustand nur dann im Tiefbau als Sekundärbaustoff verwendet werden, wenn ein direkter Kontakt mit Grundwasser aufgrund der hydrogeologischen Verhältnisse ausgeschlossen werden kann und auch kein Kontakt mit z. B. Niederschlagswasser oder Sickerwässern stattfindet. Ursache für diese Vorsichtsmaßnahme ist, dass der direkte Kontakt von Schlacke und Wasser zu einer Mobilisierung der in der Schlacke enthaltenen Schwermetalle sowie weiterer Schadstoffe führt.

Aus der EP-A-0 691 160 ist ein Verfahren zum Rückgewinnen von Wertstoffen aus Müllverbrennungsschlacke bekannt, bei welcher Schlackepartikel in Fraktionen aufgetrennt werden.

Aus der US-A-4,044,956 ist weiterhin bekannt, Verbrennungsrückstände von Abfall in Fraktionen nass aufzuarbeiten, wobei auch eine Auftrennung in Eisen- und Nichteisenmetalle erfolgt.

Die vorliegende Erfindung hat sich daher die Aufgabe gestellt, ein Verfahren zu schaffen, mit dessen Hilfe Schlacke aus Abfallverbrennungsanlagen soweit in ihre organischen, mineralischen, eisenmetallischen und nichteisenmetallischen Komponenten sortenrein zerlegt werden kann, dass diese Sortierprodukte stofflich verwertbar sind. Insbesondere soll die mineralische Komponente nach ihrer Aufbereitung ohne wesentliche Einschränkungen für tiefbautechnische Zwecke als Sekundärbaustoff verwertet werden können und die nichtmetallische Komponenten sollen ein im Metallhandel verkaufsfähiges Produkt darstellen.

Die Lösung dieser Aufgabe gelingt mit einem Verfahren zum Aufbereiten von Schlacke aus Abfallverbrennungsanlagen, bei welchem die aus der Verbrennungsanlage angelieferte "frische" Schlacke zunächst mindestens drei Monate zum Abklingen chemischer und mineralogischer Prozesse gelagert und während dieser Zeit kontinuierlich über eine Sprinkleranlage bewässert wird. Die so gealterte Schlacke wird anschließend einer Magnetscheidung, Siebung und Zerkleinerung unterworfen und danach oder zwischen den einzelnen Verfahrensstufen nach unverbrannten Abfallkomponenten - "Unverbranntes" - und groben NE-Schrotte manuell sortiert. Das so hergestellte Zwischenprodukt hat eine Kornspanne von 0 bis maximal 20 bis 50 mm. Seine Zusammensetzung und seine mechanischen Eigenschaften sind denen von konventionellen, dem Stand der Technik entsprechenden Schlackeprodukten vergleichbar.

Das so erzeugte Zwischenprodukt wird anschließend nass weiterverarbeitet. Hierzu wird es zunächst in einem Aufgabegefäß mit Wasser, das unter einem Druck von bis zu 5 Bar steht, abgebraust und auf einem Schwingsieb bei 2 mm abgesiebt. Durch die Bedüsung mit unter hohem Druck stehendem Wasser werden Agglomerate aufgelöst, ohne dass dadurch die einzelnen Komponenten zerkleinert werden. zum Abklingen chemischer und mineralogischer Prozesse gelagert und während dieser Zeit kontinuierlich über eine Sprinkleranlage bewässert wird. Die so gealterte Schlacke wird anschließend einer Magnetscheidung, Siebung und Zerkleinerung unterworfen und danach oder zwischen den einzelnen Verfahrensstufen nach unverbrannten Abfallkomponenten - "Unverbranntes" - und groben NE-Schrotte manuell sortiert. Das so hergestellte Zwischenprodukt hat eine Komspanne von 0 bis maximale 20 ....50 mm. Seine Zusammensetzung und seine mechanischen Eigenschaften sind denen von konventionellen, dem Stand der Technik entsprechenden Schlackeprodukten vergleichbar.

Das so erzeugte Zwischenprodukt wird anschließend naß weiterverarbeitet. Hierzu wird es zunächst in einem Aufgabegefäß mit Wasser, das unter einem Druck von bis zu 5 bar steht, abgebraust und auf einem Schwingsieb bei 2 mm abgesiebt. Durch die Bedüsung mit unter hohem Druck stehendem Wasser werden Agglomerate aufgelöst, ohne daß dadurch die einzelnen Komponenten zerkleinert werden.

Der Siebdurchgang, d.h. das Material < 2 mm, wird dann mit Hilfe eines Schwimm-Sink-Scheiders (Trennmedium Wasser, daher Trennschnitt bei ρ= 1 t/m³), z.B. einem Hydrobandabscheider, von schwimmfähigen Stoffen befreit. Bei diesen Schwimmstoffen (ρ < 1 t/m³) handelt es sich überwiegend um organische, d.h. nicht verbrannte Schlackekomponenten. Diese werden daher nach einer mechanischen Entwässerung, z.B. auf einem Entwässerungssieb, zur Abfallverbrennungsanlage zurück transportiert und dort erneut dem Verbrennungsofen aufgegeben. Das Sinkgut (ρ> 1 t/m³) wird im nächsten Schritt in so genannten A-Sand (0/2 mm) und B-Sand (0/1 mm) klassiert.

Aus dem Siebüberlauf, d.h. aus dem Material > 2 mm, werden zunächst mit Hilfe eines Schwimm-Sink-Scheiders die Schwimmstoffe aussortiert, die nach einer Entwässerung ebenfalls zur Abfallverbrennungsanlage zurückgeführt werden. Das Sinkgut wird anschließend auf Schwingsieben in mehrere Kornklassen getrennt und auch bei diesem Vorgang über Düsen mit Wasser (bis zu 5 bar und mehr) mechanisch beansprucht. Die so erzeugten Kornklassen können je nach maximaler Körnung des Aufgabematerials (dₘₐₓ= 20 bis 50 mm) z.B. 2/5 mm, 5/8 mm, 8/16 mm und 16/dₘₐₓ mm sein.

Untersuchungen des Erfinders haben gezeigt, daß die in Rohschlacke enthaltenen organischen Schadstoffe zu wesentlichen Anteilen an die schwimmfähigen Produkte adsorbiert sind. Durch die Abtrennung des Schwimmguts werden daher organische Schadstoffe aus dem Materialstrom ausgeschleust und zur thermischen Behandlungsanlage zurückgeführt.

Auswertungen zahlreicher großtechnischer Versuche des Erfinders haben des weiteren gezeigt, daß die gröberen Körnungen überwiegend Konglomerate thermisch gesinterter Schlackekomponenten enthalten. Diese Konglomerate sind formschlüssige Verbünde der eingangs genannten Schlackenkomponenten. Eine trennscharfe Sortierung dieser Konglomerate nach den darin enthaltenen Einzelkomponenten ist erst nach einem Aufschluß möglich, durch den die Bindungskräfte zwischen den einzelnen Komponenten aufgehoben werden. Da der Anteil der Konglomerate mit zunehmender Korngröße ansteigt, ist der untere Korndurchmesser, ab dem nur ein minimaler Anteil an Konglomeraten vorliegt, nur unscharf. Die bisherigen Betriebserfahrungen haben aber überraschenderweise gezeigt, daß ab ca. 8 mm der Anteil der Konglomerate deutlich zunimmt. Denkbar ist aber auch, daß bei Schlacke aus Abfallverbrennungsanlagen mit anderen Betriebstemperaturen diese untere Grenze bei 5 mm liegt.

Geht man davon aus, daß eine deutliche Zunahme des Konglomeratanteils bei 8 mm stattfindet, dann können bei dem oben beschriebene Beispiel die Körnungen 2/5 mm und 5/8 mm ohne einen weiteren mechanischen Aufschluß nach feinkörnigem Fe-Schrott und NE-Metallen sortiert werden, da diese Komponenten überwiegend frei, d.h. ungebunden vorliegen. Die konglomerathaltigen Kornklassen 8/16 mm und 16/dₘₐₓ mm müßten jedoch zur Freisetzung der metallischen Partikel zunächst aufgeschlossen werden. Dieser Aufschluß geschieht beispielsweise in einer langsam laufenden Prallmühle, kann aber auch in anderen Zerkleinerungsaggregaten stattfinden. Aufgrund des duktilen Charakters der Metallpartikel kann bei der Zerkleinerung auch eine Zertrümmerung der mineralischen Komponenten in Kauf genommen werden, doch erhöht sich dadurch auch das Ausbringen der weniger gut vermarktbaren Sandfraktionen. Kornschonende Verfahren werden daher bevorzugt. Nach dem Aufschluß der konglomerathaltigen Kornklassen werden diese der nassen Verfahrensstufe, d.h. dem 2 mm Sieb erneut aufgegeben.

Aus den in der naß betriebenen Aufbereitung erzeugten Vorprodukten wird in der nächsten Verfahrensstufe mit Hilfe eines Trommelmagneten, evtl. ergänzt durch einen vorgeschalteten Überbandmagneten, der feinkörnige ferromagnetische Fe-Schrott aussortiert (im obigen Beispiel wäre dies Fe-Schrott der Kornklassen 2/5 mm und 5/8 mm). Anschließend werden aus den Kornklassen mit Hilfe eines NE-Metallabscheiders die darin enthaltenen NE-Metalle aussortiert. Dieser NE-Metallabscheider funktioniert nach dem Wirbelstromprinzip und wird bereits weltweit zur Rückgewinnung von NE-Metallen wie Aluminium, Magnesium, Kupfer oder Messing aus diversen Abfallmischungen eingesetzt. Das Funktionsprinzip dieses Abscheider ist wie folgt: In der Kopftrommel des NE-Metallabscheiders befindet sich ein schnell rotierendes Permanentmagnetpolsystem. Die hohe Frequenz des Magnetfeldwechsels erzeugt starke Wirbelströme in den NE-Metallteilen. Diese Teile erzeugen wiederum Magnetfelder, die dem äußeren Feld entgegengesetzt wirken (Lenzsche Regel). Deshalb werden die NE-Metallteile abgestoßen und aus dem mineralischen Materialstrom herausgeschleudert. (s. z.B. DE 41 23 277 C1)

Chemisch-analytische Untersuchungen und verschiedene Gutachten des so aus Schlacke erzeugten mineralischen Splitts haben gezeigt, daß dessen Eluat aufgrund der voran gegangenen Aufbereitungsschritte wesentlich geringer mit Schadstoffen, wie z.B. Schwermetallen oder organischen Schadstoffen, belastet ist, als dies bei Schlacke der Fall ist, die lediglich gealtert, zerkleinert, magnetisch und manuell sortiert klassiert wurde.

Die anhand des beschriebenen Verfahrensablaufs hergestellten mineralischen Produkte weisen aufgrund der voran gegangenen Sortier-, Klassier- und Zerkleinerungsprozesse folgende primäre Eigenschaften auf:
- Eng begrenzte Kornklassen (sehr geringe Anteile an Über- und Unterkorn),
- Praktisch vollkommene Freiheit von ferromagnetischem Fe-Schrott und NE-Metallen,
- Praktisch vollkommene Freiheit von unverbrannten Anteilen,
- Geringe Schadstoffkonzentrationen in den Eluaten der mineralischen Produkte und damit hohe Umweltfreundlichkeit bei deren Verwendung im Tiefbau
- Hohe Komfestigkeiten,
- Scharfkantige Oberflächenstruktur,
- Geringer Anteil an plattigem oder sprödem Material.

Die Verwertungsmöglichkeiten für diese mineralischen Produkte im Tiefbau sind dadurch gegenüber den _{"}klassischen" Schlackeprodukten wesentlich erweitert. Die Produkte sind, wie entsprechende Gutachten zeigen, konform zur DIN 4226 bei der Herstellung von Beton als Zuschlagstoff verwertbar. Weitere Einsatzgebiete wären beispielsweise die Verwendung als Streusplitt oder die Verwertung bei der Herstellung von Asphalt. Das so aus der Schlackeaufbereitung gewonnene mineralische Produkt läßt sich mit Vorteil als Straßenbaustoff, als Komponente bei der Herstellung von bindemittelfreien Mineralstoffgemischen, deren mineralischer Anteil der Schlacke bis zu ca. 50 % beträgt oder als Zuschlagstoff bei der Betonherstellung und als Zuschlagstoff bei der Asphaltherstellung verwenden.

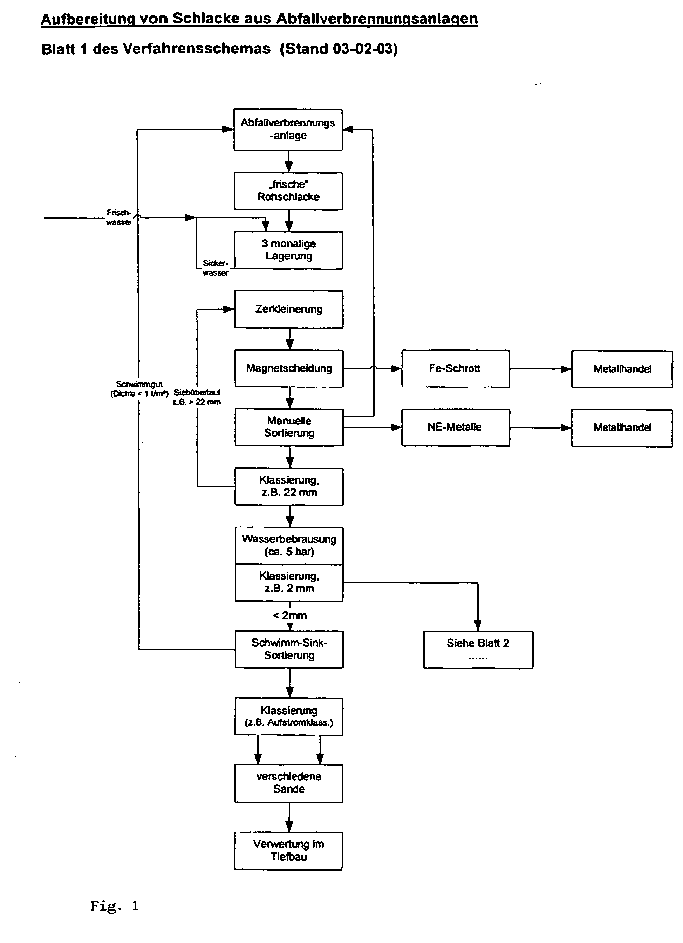

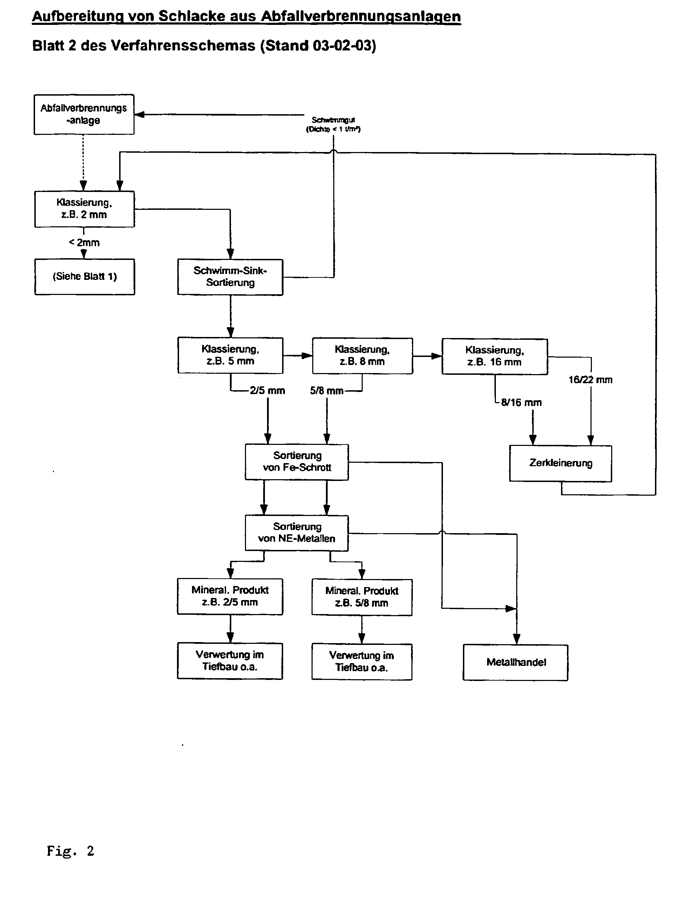

Die beiliegenden Verfahrensschemata gemäß Figur 1 und 2 veranschaulichen das erfindungsgemäße Verfahren.

## Patentansprüche

1. Verfahren zum Aufbereiten von Schlacke aus Abfallverbrennungsanlagen, bei welchem die frische Rohschlacke zunächst mindestens 3 Monate zum Abklingen mineralogischer und chemischer Prozesse gelagert, regelmäßig bewässert und anschließend einer Magnetscheidung, manuellen Sortierung sowie Zerkleinerung unterworfen wird, wobei das so hergestellte Zwischenprodukt wie folgt behandelt wird:
a) Bebrausung des Aufgabematerials mit Wasser
b) Klassierung bei ca. 2 mm und Sortierung schwimmfähiger Stoffe durch Schwimm-Sink-Scheidung, ρ bei ca. 1 t/m³, aus dem Siebüberlauf und aus dem Siebdurchgang,
c) Aufstromklassierung der Kornklasse < 2 mm nach deren Schwimm-Sink-Scheidung mit zur Herstellung von Sanden unterschiedlicher Komverteilung,
d) Klassierung der Kornklasse > 2 mm nach deren Schwimm-Sink-Scheidung in konglomerathaltige Kornklassen und konglomeratarme bzw. -freie Kornklassen,
e) Aufschluß der konglomerathaltigen Kornklassen durch kornschonende Zerkleinerung zur Freilegung der darin enthaltenen Anteile, wodurch die schwimmfähigen und metallischen Komponenten in eine sortierfähige Form überführt werden,
f) Rückführung des Zerkleinerungsproduktes zur nassen 2mm-Absiebung,
g) Sortierung von ferromagnetischem Fe-Schrott aus den konglomeratarmen bzw. -freien Kornklassen mit Hilfe eines Trommelmagneten,
h) Sortierung von NE-Metalle und nichtmagnetischem Fe-Schrott aus den konglomeratarmen bzw. -freien Kornklassen mit Hilfe eines nach dem Wirbelstromprinzip funktionierenden NE-Metall-Abscheiders,

2. Verfahren nach Anspruch 1, **dadurch gekennzeichnet, daß** die Schwimm-Sink-Scheidung durch Hydrobandabscheidung erfolgt.

3. Verfahren nach Anspruch 1 oder 2, **dadurch gekennzeichnet, daß** die Zerkleinerung der konglomerathaltigen Kornklasse 8/16 mm und 16/dₘₐₓ mm in einer langsam laufenden Prallmühle erfolgt.

## Claims

1. Method for processing slag from waste incinerator plants in which the fresh raw slag is first stored for at least 3 months for mineralogical and chemical processes to subside; it is regularly irrigated and subsequently subjected to magnetic separation, manual sorting, as well as fragmentation, with the intermediate product thus produced being treated as follows:
a) spraying the charging material with water;
b) classification at approx. 2 mm and sorting floatable materials by float/sink separation - p at approx. 1 t/m³ - from the screen overflow and from the screen passage;
c) upstream classification of the grain class < 2 mm after its float/sink separation with different grain distribution for the production of sands;
d) classification of grain class > 2 mm after its float/sink separation into conglomerate-containing grain classes and low-conglomerate or, respectively, no-conglomerate grain classes;
e) breaking up the conglomerate-containing grain classes by grain-saving fragmentation to release the parts contained therein, with the floatable and metallic components being transferred into a sortable form;
f) return of the fragmentation product for wet 2 mm screening;
g) sorting the ferromagnetic Fe scrap from the low-conglomerate or, respectively, no-conglomerate grain classes by means of a drum magnet;
h) sorting nonferrous metals and non-magnetic Fe scrap from the low-conglomerate or, respectively, no-conglomerate grain classes by means of a nonferrous metal separator working according to the eddy current principle.

2. Method according to claim 1, **characterized in that** the float/sink separation is provided by hydro belt separation.

3. Method according to claim 1 or 2, **characterized in that** the fragmentation of the conglomerate-containing grain class 8/16 mm and 16/dₘₐₓ mm is provided in a slow-speed impact mill.

## Revendications

1. Procédé pour traiter des scories provenant des incinérateurs d'ordures, dans lequel, pendant une durée d'au moins trois mois pour neutraliser progressivement les processus minéralogiques et chimiques, les scories fraîches sont d'abord stockées, régulièrement arrosées puis soumises à une séparation magnétique, un tri manuel et un broyage, le produit intermédiaire ainsi réalisé étant traité comme suit :
a) arrosage du produit à traiter avec de l'eau,
b) classification à environ 2 mm et tri des matières flottables par séparation densimétrique en milieu liquide, p à environ 1 t/m³, par le refus du tamis et par le passant du tamis,
c) classification à courant ascendant de la classe granulométrique < 2 mm suivant la séparation densimétrique de celle-ci en milieu liquide, présentant une répartition granulométrique variable pour la fabrication de sables,
d) classification de la classe granulométrique > 2 mm suivant la séparation densimétrique de celle-ci en milieu liquide en classes granulométriques contenant des conglomérats et en classes granulométriques contenant respectivement peu et pas de conglomérats,
e) préparation des classes granulométriques contenant des conglomérats par broyage avec ménagement des grains pour dégager les fractions contenues, ce qui permet de convertir les composants flottables et métalliques en une forme triable,
f) retour du produit broyé au tamisage humide 2 mm,
g) tri des déchets de fer ferromagnétiques dans les classes granulométriques contenant respectivement peu et pas de conglomérats, à l'aide d'un séparateur à tambour magnétique,
h) tri des métaux non ferreux et des déchets de fer non magnétiques dans les classes granulométriques contenant respectivement peu et pas de conglomérats, à l'aide d'un séparateur de métaux non ferreux fonctionnant selon le principe à écoulement tourbillonnaire.

2. Procédé selon la revendication 1, **caractérisé en ce que** la séparation densimétrique en milieu liquide est effectuée par séparation hydraulique à bande.

3. Procédé selon la revendication 1 ou 2, **caractérisé en ce que** le broyage de la classe granulométrique contenant des conglomérats 8/16 mm et 16/dₘₐₓ mm est effectué dans un broyeur à percussion à faible vitesse.
